# EUROPÄISCHE PATENTANMELDUNG

(11) **EP 4 527 571 A1**
(43) Veröffentlichungstag der Anmeldung: **26.03.2025**
(21) Anmeldenummer: 24200501.5
(22) Anmeldetag: 16.09.2024
(51) Int. Cl.: B25J 17/02, B25J 19/00, B25J 19/06

(54) **MOBILER KOMMISSIONIERROBOTER**

(30) Priorität: 21.09.2023 DE 102023125607
(71) Anmelder: Linde Material Handling GmbH, 63743 Aschaffenburg (DE)
(72) Erfinder: Krumbholz, Peter, 63869 Jakobsthal (DE)
(74) Vertreter: Patentship Patentanwaltgesellschaft

(57) **Zusammenfassung**

Die vorliegende Erfindung betrifft einen mobilen Kommissionierroboter (R) zur automatischen Kommissionierung von Objekten (9) mit einem Lasthandhabungsmanipulator (M), der einen Roboterarm (4, 5, 6, 7) und ein mit dem Roboterarm (4, 5, 6, 7) verbundenes Aufnahmewerkzeug (8) zur Aufnahme des Objekts (9), sowie ein Ausgleichselement (20) umfasst, das zwischen dem Roboterarm (4, 5, 6, 7) und dem Aufnahmewerkzeug (8) angeordnet ist. Das Ausgleichselement (20) ist ausgebildet, Relativbewegungen zwischen dem Roboterarm (4, 5, 6, 7) und dem Aufnahmewerkzeug (8) zuzulassen. Das Ausgleichselement (20) weist ein elastomeres Rückstellelement (23) auf, das zwischen einem Aufnahmewerkzeuggehäuse (27) und einem Ausgleichselementgehäuse (26) angeordnet ist und unmittelbar mit dem Aufnahmewerkzeuggehäuse (27) und mit dem Ausgleichselementgehäuse (26) verbunden ist, wobei das elastomere Rückstellelement (23) ausgebildet ist, bei einer Translation entlang zumindest einer der drei Translationsrichtungen und/oder bei einer Rotation des Aufnahmewerkzeugs (8) gegenüber dem Ausgleichselementgehäuse (26) eine Rückstellkraft bereitzustellen, um nach dem Ende der Translationsbewegung und/oder Rotationsbewegung eine Rückführung des Aufnahmewerkzeugs (8) in die Ursprungsposition zu ermöglichen.

## Beschreibung

Die Erfindung betrifft einen mobilen Kommissionierroboter zur automatischen Kommissionierung von Objekten mit einem Lasthandhabungsmanipulator, wobei der Lasthandhabungsmanipulator ein Ausgleichselement mit einem elastomeren Rückstellelement aufweist, welches ausgebildet ist, bei einer Translation und/oder Rotation eines Aufnahmewerkzeugs zur Aufnahme eines Objekts eine Rückstellkraft bereitzustellen.

Unter Kommissionierung versteht man alle Methoden zur Zusammenstellung von bestimmten Objekten, insbesondere von Gütern in Warenlagern oder Warenverteilzentren, aus einem bereitgestellten Gesamtsortiment. Dabei soll die Zusammenstellung aufgrund von Aufträgen, beispielsweise Kundenaufträgen oder Produktionsaufträgen erfolgen. In jüngster Zeit werden hierfür vermehrt automatische Systeme eingesetzt. Dabei werden beispielsweise Packstücke als zu kommissionierende Objekte von autonom betriebenen Transportfahrzeugen von einer Quellposition, beispielweise einer Quellpalette, aufgenommen und in einer Zielposition, beispielsweise auf einer auf dem Transportfahrzeug transportierten Zielpalette, abgesetzt.

Üblicherweise werden hierzu mobile Kommissionierroboter verwendet, welche insbesondere als zumindest teilautonom, insbesondere vollautonom, betriebene Kommissionierroboter ausgebildet sind, welche die Packstücke selbstständig mittels jeweils einem Roboterarm an der entsprechenden Quellposition aufnehmen können, die aufgenommenen Packstücke selbstständig zu der Zielposition befördern können, und die aufgenommenen Packstücke an der Zielposition selbständig absetzen können.

Entsprechende mobile Kommissionierroboter erhalten die Auftragsdaten wie Auftragsnummer, Koordinaten des Lagerortes, Stückzahl und Gewicht der Güter insbesondere automatisch von einem Zentralrechner. Sie können beispielsweise bestimmte Regalfächer in Regallagern gezielt anfahren und das gewünschte Objekt mithilfe eines ein Aufnahmewerkzeug aufweisenden Greifsystems aus dem Regalfach entnehmen. Das Aufnahmewerkzeug kann als Greifer, beispielsweise als Adhäsionsgreifer oder Vakuumgreifer, ausgebildet sein.

Entsprechende mobile Kommissionierroboter weisen einen Lasthandhabungsmanipulator auf, der meist einen Hubmast oder eine andere Hubeinrichtung zur vertikalen Positionierung des Aufnahmewerkzeugs, bzw. Greifers im Regal und auf der Zielpalette umfasst. Dabei werden für den vollautonomen, mobilen Kommissionierprozess häufig Sonderkinematiken des Roboterarms eingesetzt. Roboter mit Standardkinematiken, insbesondere 6-Achs-Industrieroboter, sind oftmals zu schwer, nicht für den mobilen Einsatz konzipiert und haben kinematische Einschränkungen, die einen Einsatz in diesem Gebiet erschweren.

Vorteilhafter sind Roboterarme mit flachen Kinematiken, die an einem Hubmast vertikal verfahren werden können. Derartige Roboterarme weisen mehrere flach, d.h. horizontal, angeordnete Armelemente auf, die einen zylindrischen Greifraum aufspannen, der sich für das Arbeiten in engen Lagerhäusern bestens eignet. Mobile Kommissionierroboter mit flachen Armkinematiken sind beispielsweise aus der DE 10 2017 129 468 A1, der DE 10 2017 130 577 und der EP 3 868 519A1 A2 bekannt.

Bei der automatischen Kommissionierung von Packstücken auf Paletten durch mobile Kommissionierroboter oder andere Handhabungsgeräte wird die Zielposition der Packstücke auf der Zielpalette nach derzeitigem Stand der Technik auf Basis von Sensordaten ermittelt. Dazu wird die Zielpalette und das darauf befindliche Packmuster aufgenommen. Hierzu wird in der Regel eine berührungslos arbeitende 3D-Sensorik, beispielsweise in Form von ToF (Time of Flight)- oder Stereo- Kameras, verwendet. Aus den Sensordaten wird ein passender Ablageplatz für das nächste Packstück errechnet, beziehungsweise ein vorab berechneter Ablageplatz validiert. Selbst bei bekanntem Packmuster auf der Zielpalette, wovon bei rein robotisch gepackten Paletten üblicherweise ausgegangen werden kann, ist eine Validierung der Ablageposition oftmals notwendig, da diverse Faktoren zu Abweichungen führen können.

Hierzu gehören insbesondere folgende Faktoren: Toleranzen in den Maßen der Packstücke; Falsche Angaben zu den Maßen der Packstücke aus den Stammdaten aufgrund mangelnder Datenqualität; Setzung des Packmusters, insbesondere bei höher gestapelten, aus mehreren Lagen bestehenden, Paletten und bei schweren Packstücken, weiter verstärkt durch das Verfahren der Zielpalette; Toleranzen in der Ablageposition der bereits abgelegten Packstücke in x-Richtung (horizontaler Längsrichtung des Kommissionierroboters), y-Richtung (horizontale Querrichtung des Kommissionierroboters) und ψ (Drehung um vertikale Achse entlang der Erstreckungsrichtung der Hubmastes) durch toleranzbehaftetes Ablegen oder durch nachträgliches Verrücken, zum Beispiel durch dynamische Einflüsse beim Verfahren der Zielpalette; Störende Elemente auf der Zielpalette, zum Beispiel Reste von Klebeband oder Folie.

Die Vermessung der Ablageposition eines Packstückes auf der Zielpalette ist toleranzbehaftet. Die Ablage des Packstücks auf der errechneten Position muss dementsprechend mit Sicherheitsabständen erfolgen, um Kollisionen mit bereits abgelegten Packstücken zu verhindern. Solche Kollisionen können zum Herunterfallen von Packstücken von der Zielpalette führen, was zu Qualitäts-, Verfügbarkeits- und Sicherheitsproblemen führen kann.

Zusätzlich zu den toleranzbehafteten Sollpositionen entstehen auch beim Ablegen des Packstückes auf der Zielpalette selbst Toleranzen. Beide Fehler addieren sich und führen zu größeren Sicherheitsabständen zwischen den Packstücken.

Sicherheitsabstände beim Ablegen der Packstücke auf der Zielpalette führen zu Spalten zwischen den Packstücken und damit zu einem nachteiligeren Packmuster auf der Zielpalette. Das Packmuster der Zielpalette wird weniger dicht, wodurch die Palette höher beladen wird, oder nicht alle Packstücke bis zur maximalen Höhe auf die Palette passen. Zusätzlich wird das Packmuster aufgrund der Spalte weniger stabil, wodurch weniger hoch gestapelt werden kann oder ein erhöhter Aufwand für die Stabilisierung, beispielsweise durch die Verwendung von Stretchfolien und Zwischenlagen, erforderlich ist.

Der vorliegenden Erfindung liegt die Aufgabe zugrunde, einen mobilen Kommissionierroboter bereitzustellen, wobei eine zielgenaue Positionierung der Objekte auch bei toleranzbehafteten Zielpositionen ermöglicht wird.

Diese Aufgabe wird gemäß einem ersten Aspekt gelöst durch einen mobilen Kommissionierroboter zur automatischen Kommissionierung von Objekten mit einem Lasthandhabungsmanipulator, wobei der Lasthandhabungsmanipulator einen Roboterarm und ein mit dem Roboterarm verbundenes Aufnahmewerkzeug zur Aufnahme des Objekts, sowie ein Ausgleichselement umfasst, welches zwischen dem Roboterarm und dem Aufnahmewerkzeug angeordnet ist, wobei das Ausgleichselement ausgebildet ist, Relativbewegungen zwischen dem Roboterarm und dem Aufnahmewerkzeug zuzulassen, wobei das Ausgleichselement ein Ausgleichselementgehäuse aufweist, welches an dem Roboterarm befestigbar ist, wobei das Ausgleichselement eine Welle aufweist, welche das Ausgleichselementgehäuse mit einem Aufnahmewerkzeuggehäuse des Aufnahmewerkzeugs verbindet, und wobei die Welle ausgebildet ist, das Aufnahmewerkzeuggehäuse des Aufnahmewerkzeugs gegenüber dem Ausgleichselementgehäuse entlang von drei Translationsrichtungen, insbesondere x-Richtung, y-Richtung und z-Richtung, zu translatieren und entlang einer Rotationsrichtung um die Wellenlängsachse der Welle, insbesondere um den ψ-Winkel, zu rotieren, wobei das Ausgleichselement ein elastomeres Rückstellelement aufweist, welches zwischen dem Aufnahmewerkzeuggehäuse und dem Ausgleichselementgehäuse angeordnet ist und unmittelbar mit dem Aufnahmewerkzeuggehäuse und mit dem Ausgleichselementgehäuse verbunden ist, wobei das elastomere Rückstellelement ausgebildet ist, bei einer Translation entlang zumindest einer der drei Translationsrichtungen und/oder bei einer Rotation des Aufnahmewerkzeugs gegenüber dem Ausgleichselementgehäuse eine Rückstellkraft bereitzustellen, um nach dem Ende der Translationsbewegung und/oder Rotationsbewegung eine Rückführung des Aufnahmewerkzeugs in die Ursprungsposition zu ermöglichen.

Dadurch wird der technische Vorteil erreicht, dass durch das elastomere Rückstellelement des Ausgleichselements eine Nachgiebigkeit des Aufnahmewerkzeugs für eine Vielzahl von Freiheitsgraden erreicht wird, wodurch Toleranzen bei den Zielpositionen der kommissionierten Objekte ausgeglichen werden können.

Bevorzugt ist das elastomere Rückstellelement ausgebildet, eine Toleranz in den drei Translationsrichtungen, insbesondere x-Richtung, y-Richtung und z-Richtung, zu gewährleisten, wobei sich die x-Richtung entlang der Fahrzeuglängsachse des mobilen Kommissionierroboters erstreckt, wobei sich die y-Richtung entlang der orthogonal zur Fahrzeuglängsachse angeordneten Fahrzeugquerachse erstreckt, und wobei sich die z-Richtung entlang der orthogonal zur Fahrzeuglängsachse und orthogonal zur Fahrzeugquerachse angeordneten Fahrzeughochachse erstreckt.

Bevorzugt ist das elastomere Rückstellelement ausgebildet, eine Toleranz in der Rotationsrichtung um die Wellenlängsachse der Welle, insbesondere um die z-Richtung, insbesondere um den ψ-Winkel zu erreichen.

Hierbei ist das Ausgleichselement aus mindestens drei Segmenten aufgebaut, umfassend das Ausgleichselementgehäuse, welches insbesondere Teil eines xy-Elements des Ausgleichselements ist und Relativbewegungen in der horizontalen xy-Ebene erlaubt, dem Aufnahmewerkzeuggehäuse des Aufnahmewerkzeugs, und dem elastomeren Rückstellelement, welches zwischen dem Ausgleichselementgehäuse und dem Aufnahmewerkzeuggehäuse angeordnet ist.

Wenn das Aufnahmewerkzeug beim Ablegen eines Objekts, beispielsweise auf einer Zielpalette, in Kontakt mit einem zu der Zielposition benachbarten Objekt kommt, ermöglicht die durch die Elastizität des elastomeren Rückstellelements bereitgestellte Verformbarkeit, dass das Aufnahmewerkzeug gegenüber dem Ausgleichselementgehäuse verlagert wird, so dass verhindert wird, dass das zu der Zielposition benachbarte Objekt verschoben wird, bzw. sogar von der Zielpalette heruntergeschoben wird.

Die elastischen Materialeigenschaften des elastomeren Rückstellelements bewirken bei einer entsprechenden Verformung das Bereitstellen einer Rückstellkraft, welche nach dem Ende des Kontakts zwischen dem Aufnahmewerkzeug und dem zur der Zielposition benachbarten Objekt, beispielweise nach dem Ablegen des durch das Aufnahmewerkzeug bewegten Objekts an der Zielposition, sicherstellt, dass sich das elastomere Rückstellelement wieder in den Ursprungszustand zurückverformt, so dass die Verformbarkeit des elastomeren Rückstellelements reversibel ist.

Dies ermöglicht ein Ablegen von Objekten, beispielsweise auf einer Zielpalette, in direktem Kontakt mit einem zu der Zielposition benachbarten Objekt, bzw. mit einer minimalen Spaltbreite zwischen den abgelegten Objekten, so dass ein besonders vorteilhaft eng gepacktes Packmuster auf der Zielpalette erreicht wird.

Zudem kann das Ausgleichselement insbesondere noch ein Feststellelement aufweisen, welches insbesondere zwischen dem Roboterarm und dem Ausgleichselementgehäuse angeordnet ist, und welches eine Arretierung des Ausgleichselementgehäuse, bzw. des xy-Elements ermöglicht.

Somit ist das Ausgleichselementgehäuse des Ausgleichselements insbesondere mit dem Feststellelement verbunden, insbesondere unmittelbar verbunden, und ist das Feststellelement insbesondere mit dem Roboterarm verbunden, insbesondere unmittelbar verbunden, um die somit indirekte Befestigung des Ausgleichselementgehäuses an dem Roboterarm bereitzustellen.

Gemäß einer Ausführungsform weist das elastomere Rückstellelement einen Durchbruch auf, welcher sich von einer dem Ausgleichselementgehäuse zugewandten Seite des elastomeren Rückstellelements zu einer dem Aufnahmewerkzeuggehäuse zugewandten Seite des elastomeren Rückstellelements erstreckt, und wobei die Welle durch den Durchbruch geführt ist, wobei der Durchbruch insbesondere mittig in dem elastomeren Rückstellelement angeordnet ist.

Dadurch wird der technische Vorteil erreicht, dass die Welle von dem Ausgleichselementgehäuse durch den Durchbruch des elastomeren Rückstellelements zu dem Aufnahmewerkzeuggehäuse geführt werden kann. Durch den Durchmesser des Durchbruchs, welcher insbesondere größer ist als der Durchmesser der Welle, wird bei einer Verlagerung des Aufnahmewerkzeugs gegenüber dem Ausgleichselements ein ausreichender Bewegungsspielraum der Welle innerhalb des elastomeren Rückstellelements bereitgestellt.

Gemäß einer Ausführungsform ist das elastomere Rückstellelement als ein Hohlzylinder, insbesondere ringförmiger oder scheibenförmiger Hohlzylinder, ausgebildet, wobei eine obere Grundfläche des Hohlzylinders unmittelbar mit dem Ausgleichselementgehäuse verbunden ist, wobei eine untere Grundfläche des Hohlzylinders unmittelbar mit dem Aufnahmewerkzeuggehäuse verbunden ist, und wobei die Welle durch einen Hohlkörperinnenraum des Hohlzylinders geführt ist.

Dadurch wird der technische Vorteil erreicht, dass durch den Hohlzylinder eine wirksame unmittelbare Kopplung zwischen dem Ausgleichselementgehäuse und dem Aufnahmewerkzeuggehäuse erreicht werden kann, und dass der Hohlkörperinnenraum eine wirksame Aufnahme der Welle sicherstellt.

Gemäß einer Ausführungsform ist das elastomere Rückstellelement aus einem elastomeren Schaumstoff und/oder einem Elastomer-Kunststoff geformt.

Dadurch wird der technische Vorteil erreicht, dass das genannte Material die elastischen Eigenschaften des elastomeren Rückstellelements bereitstellt und eine entsprechende reversible Verformung des elastomeren Rückstellelements ermöglicht, so dass die nach einer Verformung bereitgestellte Rückstellkraft des elastomeren Rückstellelements nach dem Ende der auf das elastomere Rückstellelement wirkenden Kraft eine Rückverformung des elastomeren Rückstellelements in den Ursprungszustand ermöglicht.

Gemäß einer Ausführungsform weist das elastomere Rückstellelement unterschiedliche Bereiche mit unterschiedlicher Rückstellkraft auf, um die Translation und/oder Rotation des Aufnahmewerkzeuggehäuse gegenüber dem Ausgleichselementgehäuse zu beeinflussen, wobei die Bereiche mit unterschiedlicher Rückstellkraft insbesondere durch unterschiedliche Wandstärken des elastomeren Rückstellelements und/oder durch unterschiedliche entlang sich der Welle erstreckender Höhen des elastomeren Rückstellelements und/oder durch die Verwendung von Materialien mit unterschiedlicher Elastizität und/oder durch Einschnitte in das elastomere Rückstellelement und/oder durch in das elastomere Rückstellelement eingeführte Bauteile mit einer unterschiedlichen Rückstellkraft charakterisiert sind.

Dadurch wird der technische Vorteil erreicht, dass durch die Bereiche des elastomeren Rückstellelements mit unterschiedlicher Rückstellkraft eine Feinabstimmung des Rückstellverhaltens des elastomeren Rückstellelements ermöglicht wird, beispielsweise um je nach Anwendungsfall in einem oder mehren der vier Freiheitsgrade, umfassend die Translation in x-Richtung, y-Richtung und/oder z-Richtung und/oder die Rotation um den ψ-Winkel, eine höhere oder geringere Rückstellkraft bereitzustellen, wodurch eine Feinabstimmung der Rückstellkraft des elastomeren Rückstellelements in Bezug auf den spezifischen Anwendungsfall ermöglicht wird.

Gemäß einer Ausführungsform besteht das elastomere Rückstellelement aus einer Mehrzahl von modular zusammengefügten Unterelementen, welche insbesondere zumindest ein Nachgiebigkeitselement aufweisen, welches eine geringe Rückstellkraft bereitstellt und/oder zumindest ein Widerstandselement aufweisen, welches eine hohe Rückstellkraft bereitstellt.

Dadurch wird der technische Vorteil erreicht, dass durch die modular zusammengefügten Unterelemente eine vorteilhafte und einfach zu verändernde Anpassung des elastomeren Rückstellelements an den Anwendungsfall, insbesondere an unterschiedlich starke Gewichte der zu bewegenden Objekte, ermöglicht wird.

Gemäß einer Ausführungsform ist die Welle drehfest mit dem Aufnahmewerkzeuggehäuse verbunden, wobei in dem Ausgleichselementgehäuse eine Führungshülse angeordnet ist, in der die Welle längsverschiebbar angeordnet ist, wobei die Führungshülse ausgebildet ist, eine Verlagerung der Welle zu ermöglichen, um das Aufnahmewerkzeuggehäuse des Aufnahmewerkzeugs gegenüber dem Ausgleichselementgehäuse entlang der z-Richtung zu translatieren.

Dadurch wird der technische Vorteil erreicht, dass die Führungshülse eine Doppelfunktion ermöglicht. Einerseits stellt die Führungshülse eine wirksame Positionierung der Welle in dem Ausgleichselementgehäuse sicher, andererseits kann durch die Längsverschiebbarkeit der Welle innerhalb der Führungshülse eine vorteilhafte z-Richtungs-Translation erreicht werden. Die z-Richtung erstreckt sich hierbei insbesondere orthogonal zu der Fahrzeuglängsachse und orthogonal zu der Fahrzeugquerachse.

Gemäß einer Ausführungsform ist die Welle in der Führungshülse um die Wellenlängsachse drehbar angeordnet, wobei die Führungshülse ausgebildet ist, eine Verdrehung der Welle zu ermöglichen, um das Aufnahmewerkzeuggehäuse des Aufnahmewerkzeugs gegenüber dem Ausgleichselementgehäuse und um den ψ-Winkel zu rotieren.

Dadurch wird der technische Vorteil erreicht, dass durch die Führungshülse der vierte Rotationsfreiheitsgrad der Welle durch die Rotation um den ψ-Winkel bereitgestellt werden kann. Insbesondere erstreckt sich Wellenlängsachse entlang der z-Richtung.

Gemäß einer Ausführungsform ist in dem Ausgleichselementgehäuse eine Scheibe mit einer Scheibenöffnung angeordnet, wobei die Führungshülse in der Scheibenöffnung der Scheibe befestigt ist.

Dadurch wird der technische Vorteil erreicht, dass die Scheibe eine wirksame Lagerung und Stabilisierung der Welle sicherstellt.

Gemäß einer Ausführungsform ist in dem Ausgleichselementgehäuse eine Lagereinrichtung, insbesondere mindestens ein Axialkugellager, angeordnet, welche ausgebildet ist, eine Verschiebung der Scheibe innerhalb des Ausgleichselementgehäuses, insbesondere entlang der x-Richtung und/oder y-Richtung, zu ermöglichen, um das durch die Welle mit dem Ausgleichselementgehäuse verbundene Aufnahmewerkzeuggehäuse entlang der x-Richtung und/oder y-Richtung zu verlagern.

Dadurch wird der technische Vorteil erreicht, dass die Lagereinrichtung eine wirksame Verlagerung der Welle in der durch die x-Richtung und y-Richtung aufgespannte xy-Ebene ermöglicht.

Gemäß einer Ausführungsform ist die Scheibe mittels der Lagereinrichtung zwischen einer Bodenplatte des Ausgleichselementgehäuses und einer Deckelplatte des Ausgleichselementgehäuses verschiebbar angeordnet.

Dadurch wird der technische Vorteil erreicht, dass eine vorteilhafte Positionierung der Scheibe innerhalb des Ausgleichselementgehäuses möglich ist.

Gemäß einer Ausführungsform ist die Deckelplatte im Ausgleichselementgehäuse verstellbar angeordnet, wobei insbesondere zwischen der Deckelplatte des Ausgleichselementgehäuses und dem Ausgleichselementgehäuse ein Einstellgewinde ausgebildet ist.

Dadurch wird der technische Vorteil erreicht, dass ein spielfreies Einstellen der Scheibe zwischen Bodenplatte und Deckelplatte ermöglicht wird.

Gemäß einer Ausführungsform weist das Ausgleichselement ein Feststellelement auf, welches unmittelbar mit dem Ausgleichselementgehäuse und unmittelbar mit dem Roboterarm verbunden ist, wobei die Welle durch das Ausgleichselementgehäuse geführt und mit dem Feststellelement verbunden ist.

Dadurch wird der technische Vorteil erreicht, dass durch das Feststellelement eine wirksame Arretierung des Ausgleichselements möglich ist, um, wenn gewünscht, eine Ausgleichsbewegung des Ausgleichselements zu verhindern.

Gemäß einer Ausführungsform weist das Ausgleichselement zumindest ein Stabilisierungselement, insbesondere mindestens ein Metallseil, auf, welches mit dem Ausgleichselementgehäuse und mit dem Aufnahmewerkzeuggehäuse verbunden ist.

Dadurch wird der technische Vorteil erreicht, dass das Stabilisierungselement auf das elastomere Rückstellelement wirkende Zugbelastungen kompensieren kann.

Gemäß einer Ausführungsform weist das Ausgleichselement zumindest eine Sensoreinrichtung auf, welche ausgebildet ist, zumindest eine Translation und/oder eine Rotation des Aufnahmewerkzeuggehäuses gegenüber dem Ausgleichselementgehäuse zu erfassen.

Dadurch wird der technische Vorteil erreicht, dass durch die sensorische Erfassung der entsprechenden Ausgleichsbewegung des Ausgleichselements eine wirksame Feinjustierung der Bewegung des Roboterarms ermöglicht wird.

Gemäß einer Ausführungsform weist das Ausgleichselement zumindest eine xy-Sensoreinrichtung auf, welche ausgebildet ist, eine Translation des Aufnahmewerkzeuggehäuses gegenüber dem Ausgleichselementgehäuse entlang der x-Richtung und/oder der y-Richtung zu erfassen, und/oder weist das Ausgleichselement zumindest eine z-Sensoreinrichtung auf, welche ausgebildet ist, eine Translation des Aufnahmewerkzeuggehäuses gegenüber dem Ausgleichselementgehäuse entlang der z-Richtung zu erfassen, und/oder weist das Ausgleichselement zumindest einen Rotationssensor aufweist, welcher ausgebildet ist, eine Rotation des Aufnahmewerkzeuggehäuses gegenüber dem Ausgleichselementgehäuse, insbesondere um den ψ-Winkel, zu erfassen.

Dadurch wird der technische Vorteil erreicht, dass je nach Anwendungsfall unterschiedliche Sensoren verwendet werden können, um eine Verlagerung entlang einem oder mehreren der Freiheitsgrade zu erfassen.

Gemäß einer Ausführungsform ist die zumindest eine xy-Sensoreinrichtung ausgebildet, eine Positionsveränderung der Welle in dem Ausgleichselementgehäuse zu erfassen und/oder ist die xy-Sensoreinrichtung ausgebildet, eine Verschiebung der Scheibe in dem Ausgleichselementgehäuse zu erfassen, um eine Translation des Aufnahmewerkzeuggehäuse gegenüber dem Ausgleichselementgehäuse entlang der x-Richtung und/oder der y-Richtung zu erfassen.

Dadurch wird der technische Vorteil erreicht, dass eine vorteilhafte Verlagerung entlang der x-Richtung und/oder entlang der y-Richtung erfasst werden kann.

Gemäß einer Ausführungsform ist die zumindest eine z-Sensoreinrichtung ausgebildet, eine Veränderung des Abstands zwischen dem Ausgleichselementgehäuse und dem Aufnahmewerkzeuggehäuse zu erfassen, um eine Translation des Aufnahmewerkzeuggehäuses gegenüber dem Ausgleichselementgehäuse entlang der z-Richtung zu erfassen.

Dadurch wird der technische Vorteil erreicht, dass eine wirksame Erfassung der Verlagerung entlang der z-Richtung ermöglicht wird.

Gemäß einer Ausführungsform weist der mobile Kommissionierroboter eine Steuerung auf, welche steuerungstechnisch mit der zumindest einen Sensoreinrichtung und mit zumindest einem Antrieb des Roboterarms verbunden ist, und wobei die Steuerung ausgebildet ist, den zumindest einen Antrieb des Roboterarms in Abhängigkeit von der durch die Sensoreinrichtung erfassten Translation und/oder Rotation des Aufnahmewerkzeuggehäuses gegenüber dem Ausgleichselementgehäuse zu steuern, um eine vorteilhafte Positionierung des durch das Aufnahmewerkzeug aufgenommenen Objekts zu erreichen.

Dadurch wird der technische Vorteil erreicht, dass durch die sensorische Erfassung der Translation und/oder Rotation des Aufnahmewerkzeuggehäuse gegenüber dem Ausgleichselementgehäuse die mit dem Antrieb des Roboterarms verbundene Steuerung den Roboterarm derart präzise ansteuern kann, dass eine spaltfreie Positionierung von Objekten ermöglicht wird.

Weitere Vorteile und Einzelheiten der Erfindung werden beispielhaft anhand des in den schematischen Figuren dargestellten Ausführungsbeispiels näher erläutert. Hierbei zeigen
die Figuren 1A und 1B einen mobilen Kommissionierroboter zur automatischen Kommissionierung von Objekten mit einem Lasthandhabungsmanipulator gemäß einem Ausführungsbeispiel der vorliegenden Erfindung,
die Figur 2 eine schematische Ansicht des in Fig. 1A dargestellten Ausgleichselements gemäß einem Ausführungsbeispiel der vorliegenden Erfindung,
die Figur 3 eine schematische Schnittansicht des in Fig. 2 dargestellten Ausgleichselements gemäß einem Ausführungsbeispiel der vorliegenden Erfindung und
die Figuren 4A bis 4D schematische Darstellungen eines Kommissionier-Vorgangs zur Kommissionierung von Objekten mit einem Lasthandhabungsmanipulator eines mobilen Kommissionierroboters gemäß einem Ausführungsbeispiel der vorliegenden Erfindung.

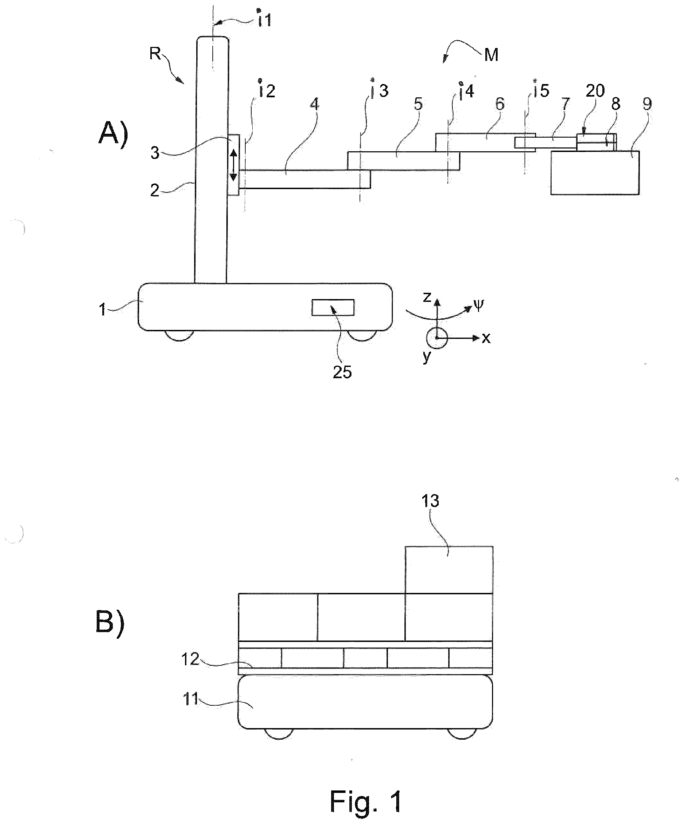

Die Figur 1A zeigt einen mobilen Kommissionierroboter R zur automatischen Kommissionierung von Objekten 9 mit einem Lasthandhabungsmanipulator M gemäß einem Ausführungsbeispiel der vorliegenden Erfindung.

Der in Figur 1A dargestellte mobile Kommissionierroboter R dient dem automatischen Kommissionieren, also dem Zusammenstellen von bestimmten Objekten, insbesondere von Gütern in Warenlagern oder Warenverteilzentren, aus einem bereitgestellten Gesamtsortiment.

Der mobile Kommissionierroboter R weist hierzu einen Lasthandhabungsmanipulator M mit einem Roboterarm 4, 5, 6, 7 auf, der über einen höhenverfahrbaren Schlitten 3 an einem vertikalen Hubmast 2 befestigt ist, um eine vorteilhafte vertikale Positionierung eines an dem Lasthandhabungsmanipulator M angeordneten Greifers im Regal und auf der Zielpalette zu erreichen.

Insbesondere ist der mobile Kommissionierroboter R als ein zumindest teilautonomer, insbesondere voll autonomer mobiler Kommissionierroboter R ausgebildet, welcher insbesondere Packstücke als zu kommissionierende Objekte 9 von einer Quellposition, beispielsweise einer Quellpalette, aufnimmt und in einer Zielposition, beispielsweise auf einer durch das Transportfahrzeug transportierten Zielpalette und/oder eine Zielpalette in einem Regal absetzt.

Insbesondere ist der mobile Kommissionierroboter R hierbei ausgebildet, die Packstücke selbstständig mittels des Roboterarms 4, 5, 6, 7 aufzunehmen. Beispielsweise erhält der mobile Kommissionierroboter R hier die Auftragsdaten wie Auftragsnummer, Koordinaten des Lagerortes, Stückzahl und Gewicht der Güter automatisch von einem Zentralrechner. So kann der mobile Kommissionierroboter R bestimmte Regalfächer in Regallagern gezielt anfahren und das gewünschte Objekt mithilfe eines ein Aufnahmewerkzeug 8 aufweisendem Greifsystems aus dem Regalfach entnehmen. Das Aufnahmewerkzeug 8 kann als Greifer, beispielsweise als Adhäsionsgreifer oder Vakuumgreifer, ausgebildet sein.

Der mobile Kommissionierroboter R weist eine flache Armkinetik eines Lasthandhabungsmanipulators M nach dem sogenannten Scara-Prinzip auf.

Wie aus der Figur 1A hervorgeht, weist der Roboterarm 4, 5, 6, 7 ein erstes Armelement 4 auf, welches über die vertikale Achse i2 mit dem Schlitten 3 verbunden ist. Der Roboterarm 4, 5, 6, 7 weist ein zweites Armelement 5 auf, welches über die vertikale Achse i3 mit dem ersten Armelement 4 verbunden ist. Der Roboterarm 4, 5, 6, 7 weist ein drittes Armelement 6 auf, welches über die vertikale Achse i4 mit dem zweiten Armelement 5 verbunden ist. Der Roboterarm 4, 5, 6, 7 weist ein viertes Armelement 7 auf, welches über die vertikale Achse i5 mit dem dritten Armelement 6 verbunden ist. Der Hubmast 2 mit dem daran höhenverfahrbaren Schlitten 3 stellt eine vertikale Achse i1 dar.

An dem vierten Armelement 7 ist ein Ausgleichselement 20 angeordnet, wobei an dem Ausgleichselement 20 das insbesondere als Greifer ausgebildete Aufnahmewerkzeug 8 angeordnet ist. Das als Greifer ausgebildete Aufnahmewerkzeug 8 ist hierbei insbesondere als ein Vakuumgreifer ausgeführt, welcher beispielsweise als Packstücke 13 ausgebildete Objekte 9 von oben greift.

Das Ausgleichselement 20 ist somit zwischen dem Roboterarm 4, 5, 6, 7 und dem Aufnahmewerkzeug 8 angeordnet und ist ausgebildet, Relativbewegungen zwischen dem Roboterarm 4, 5, 6, 7 und dem Aufnahmewerkzeug 8 zuzulassen. Somit stellt das Ausgleichselement 20 eine Nachgiebigkeit für mehrere Freiheitsgrade sicher.

Das Ausgleichselement 20 weist hierbei eine Nachgiebigkeit in den drei Translationsrichtungen auf, umfassend eine Nachgiebigkeit entlang der in Figur 1 dargestellten x-Richtung, welche einer Längsrichtung des mobilen Kommissionierroboters R entspricht, umfassend eine Nachgiebigkeit entlang der in Figur 1 dargestellten y-Richtung, welche einer zur Längsrichtung orthogonalen Querrichtung des mobilen Kommissionierroboters R entspricht, und umfassend eine Nachgiebigkeit entlang der in Figur 1 dargestellten z-Richtung, welche einer zur Längsrichtung und Querrichtung orthogonalen Hochrichtung des mobilen Kommissionierroboters R entspricht.

Das Ausgleichselement 20 kann zudem eine Nachgiebigkeit entlang einer Rotationsrichtung um die z-Achse aufweisen, was dem in der Figur 1 lediglich schematisch dargestellten ψ-Winkel entspricht.

Gemäß der Figur 1A kann der mobile Kommissionierroboter R eine Steuerung 25 aufweisen, welche unter anderem ausgebildet ist, die Nachgiebigkeit des Ausgleichselements 20 aktiv freizugeben oder eine Arretierung des Ausgleichselements 20 einzuleiten.

In der Fig. 1B ist ein als Zielpalette ausgebildeter Zielladungsträger 12 gezeigt, welcher insbesondere auf einem Begleitfahrzeug 11 angeordnet ist. Auf dem Zielladungsträger 12 sind Packstücke 13 in einem Packmuster mit geringen Spalten zwischen den einzelnen Packstücken 13 abgelegt.

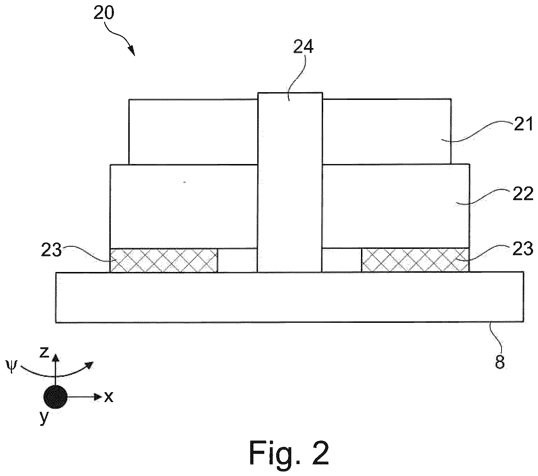

Die Figur 2 zeigt eine schematische Ansicht des in Fig. 1A dargestellten Ausgleichselements 20 gemäß einem Ausführungsbeispiel der vorliegenden Erfindung.

Das in Figur 2 gezeigte Ausgleichselement 20 ist aus drei Sektionen aufgebaut, die aus einem Feststellelement 21, einem xy-Element 22 und einem elastomeren Rückstellelement 23 bestehen, wobei das elastomere Rückstellelement 23 hier zwischen dem xy-Element 22 und dem als Greifer ausgebildeten Aufnahmewerkzeug 8 angeordnet ist. Hierbei ist das elastomere Rückstellelement 23 insbesondere als ein Hohlzylinder geformt.

Das Feststellelement 21, das xy-Element 22 und das Aufnahmewerkzeug 8 sind hier über eine Welle 24 des Ausgleichselements 20 miteinander verbunden. Das Ausgleichselement 20 ermöglicht Relativbewegungen zwischen dem Armelement 7 und dem Greifer 8 mit dem Packstück 9 in x-Richtung, in y-Richtung, in z-Richtung und eine Drehbewegung entlang des ψ-Winkels um die vertikale z-Richtung.

Der Greifer 8 ist im dargestellten Ausführungsbeispiel als Vakuumgreifer, bestehend aus einer Vakuumkammer und einer Schaumauflage, dargestellt. Andere Greifertypen sind jedoch ebenfalls denkbar, beispielsweise Backengreifer oder Magnetgreifer oder Klebegreifer.

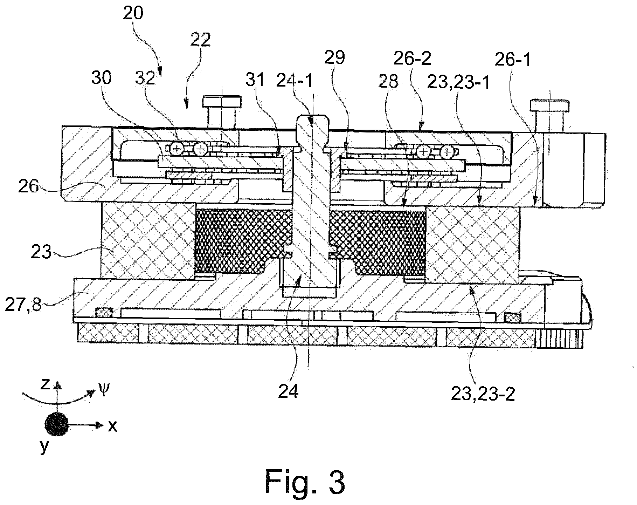

Die Figur 3 zeigt eine schematische Schnittansicht des in Fig. 2 dargestellten Ausgleichselements 20 gemäß einem Ausführungsbeispiel der vorliegenden Erfindung.

In der Figur 3 ist nur ein Ausschnitt des in Figur 2 dargestellten Ausgleichselements 20 gezeigt, umfassend das xy-Element 22, das elastomere Rückstellelement 23 und das als Greifer ausgebildete Aufnahmewerkzeug 8. Das in der Figur 2 lediglich schematisch dargestellte Feststellelement 21 ist in der Figur 3 nicht gezeigt.

Aus der Figur 3 geht insbesondere das elastomere Rückstellelement 23 des Ausgleichselements 20 hervor, welches zwischen dem Ausgleichselementgehäuse 26 des xy-Elements 22 und dem Aufnahmewerkzeuggehäuse 27 des Aufnahmewerkzeugs 8 angeordnet ist, und unmittelbar mit dem Aufnahmewerkzeuggehäuse 27 und mit dem Ausgleichselementgehäuse 26 verbunden ist.

Die Funktion des elastomeren Rückstellelements 23 wird nachfolgend im Detail beschrieben.

In der Figur 3 ist ferner die Welle 24 des Ausgleichselements 20 gezeigt, welche das Ausgleichselementgehäuse 26 des xy-Elements 22 mit dem Aufnahmewerkzeuggehäuse 27 verbindet, wobei sich die Welle 24 hierbei durch einen Durchbruch 28 des elastomeren Rückstellelements 23 erstreckt, welcher mittig in dem elastomeren Rückstellelement 23 angeordnet ist.

Wie aus der Figur 3 ferner hervorgeht, ist das elastomere Rückstellelement 23 als ein Hohlzylinder, insbesondere ringförmiger oder scheibenförmiger Hohlzylinder, ausgebildet, wobei eine obere Grundfläche 23-1 des Hohlzylinders unmittelbar mit dem Ausgleichselementgehäuse 26 verbunden ist, wobei eine untere Grundfläche 23-2 des Hohlzylinders unmittelbar mit dem Aufnahmewerkzeuggehäuse 27 verbunden ist.

Hierbei ist die Welle 24 drehfest mit dem Aufnahmewerkzeuggehäuse 27 verbunden.

Ferner ist in dem Ausgleichselementgehäuse 26 eine Führungshülse 29 angeordnet, durch welche die Welle 24 geführt ist, wobei die Führungshülse 29 ausgebildet ist, eine Verlagerung der Welle 24 zu ermöglichen, um das Aufnahmewerkzeuggehäuse 27 des Aufnahmewerkzeugs 8 gegenüber dem Ausgleichselementgehäuse 26 entlang der z-Richtung zu translatieren.

Die Welle 24 ist ferner in der Führungshülse 29 um die Wellenlängsachse 24-1 drehbar angeordnet, wobei die Führungshülse 29 ausgebildet ist, eine Verdrehung der Welle 24 zu ermöglichen, um das Aufnahmewerkzeuggehäuse 27 des Aufnahmewerkzeugs 8 gegenüber dem Ausgleichselementgehäuse 26 um den in Figur 3 dargestellten ψ-Winkel zu rotieren.

Ferner ist in dem Ausgleichselementgehäuse 26 des xy-Elements 22 eine Scheibe 30 mit einer Scheibenöffnung 31 angeordnet, wobei die Führungshülse 29 in der Scheibenöffnung 31 der Scheibe 30 befestigt ist.

Hierbei ist in dem Ausgleichselementgehäuse 26 eine Lagereinrichtung 32, insbesondere mindestens ein Axialkugellager, angeordnet, welche ausgebildet ist, eine Verschiebung der Scheibe 30 innerhalb des Ausgleichselementgehäuses 26, insbesondere entlang der x-Richtung und/oder y-Richtung, zu ermöglichen, um das durch die Welle 24 mit dem Ausgleichselementgehäuse 26 verbundene Aufnahmewerkzeuggehäuse 26 entlang der x-Richtung und/oder y-Richtung zu verlagern, so dass eine frei schwimmende Verlagerung der Scheibe 30 in der xy-Ebene erreicht wird.

Die Scheibe 30 ist mittels der Lagereinrichtung 32, die bevorzugt von mindestens einem Axialkugellager gebildet ist, zwischen einer Bodenplatte 26-1 des Ausgleichselementgehäuses 26, und einer Deckelplatte 26-2 des Ausgleichselementgehäuses 26 verschiebbar angeordnet. Hierbei ist die Bodenplatte 26-1 des Ausgleichselementgehäuses 26 mit dem elastomeren Rückstellelement 23 und ist die Deckelplatte 26-2 des Ausgleichselementgehäuses 26 mit dem in Figur 3 nicht dargestellten Feststellelement 21 verbunden.

Insbesondere ist die Deckelplatte 26-2 im Ausgleichselementgehäuse 26 verstellbar angeordnet, wobei insbesondere zwischen der Deckelplatte 26-2 des Ausgleichselementgehäuses 26 und dem Ausgleichselementgehäuse 26 ein in Figur 3 schematisch dargestelltes Einstellgewinde am Außenumfang der Deckelplatte 26-2 vorhanden ist, welches ausgebildet ist, ein spielfreies Einstellen der Scheibe 30 zwischen der Bodenplatte 26-1 und der Deckelplatte 26-2 zu ermöglichen.

Ferner wird betont, dass das in Figur 3 nicht dargestellte Feststellelement 21 des Ausgleichselements 20 unmittelbar mit dem Ausgleichselementgehäuse 26 und unmittelbar mit dem Roboterarm 4, 5, 6, 7 verbunden ist, wobei die Welle 24 durch das Ausgleichselementgehäuse 26 geführt und der in Figur 3 nicht dargestellte obere Bereich der Welle 24 mit dem Feststellelement 21 verbunden ist.

Nachfolgend wird auf die Funktion des elastomeren Rückstellelements 23 des Ausgleichselements 20 gemäß der vorliegenden Erfindung eingegangen.

Wie bereits ausgeführt wurde, ist die Welle 24 ausgebildet, das Aufnahmewerkzeuggehäuse 27 des Aufnahmewerkzeugs 8 gegenüber dem Ausgleichselementgehäuse 26 entlang von drei Translationsrichtungen, insbesondere x-Richtung, y-Richtung und/oder z-Richtung, zu translatieren und entlang einer Rotationsrichtung um die Wellenlängsachse 24-1 der Welle 24, insbesondere um den ψ-Winkel, zu rotieren. Hierbei wird insbesondere die Translation in der xy-Ebene durch die bereits beschriebene Scheibe 30 ermöglicht und wird die Verlagerung der Welle 24 entlang der z-Richtung und die Rotation um den ψ-Winkel durch die Führungshülse 29 ermöglicht. Das elastomere Rückstellelement 23 stellt hierbei eine entsprechende Flexibilität/Nachgiebigkeit in den entsprechenden Freiheitsgraden x, y, z, ψ zur Verfügung.

Die Funktion des erfindungsgemäßen elastomeren Rückstellelements 23 liegt weiterhin darin, dass das elastomere Rückstellelement 23 ausgebildet ist, bei einer Translation entlang zumindest einer der drei Translationsrichtungen und/oder bei einer Rotation des Aufnahmewerkzeugs 8 gegenüber dem Ausgleichselementgehäuse 26 eine Rückstellkraft bereitzustellen, um nach dem Ende der Translationsbewegung und/oder der Rotationsbewegung eine Rückführung des Aufnahmewerkzeugs 8 in die Ursprungsposition zu ermöglichen.

Die entsprechende Flexibilität/Nachgiebigkeit und die entsprechende Rückstellkraft wird durch die elastomeren Materialeigenschaft des elastomeren Rückstellelements 23 bereitgestellt. Das elastomere Material des elastomeren Rückstellelements 23 wird bei einer Verlagerung des Aufnahmewerkzeugs 8 gegenüber dem Ausgleichselementgehäuse 26 entlang zu einem der genannten Bewegungsfreiheitsgrade komprimiert, wobei das entsprechende komprimierte elastomere Material nach einem Ende der Translationsbewegung und/oder Rotationsbewegung wieder relaxiert und sich in die ursprüngliche Konfiguration zurückverformt, so dass eine vorteilhafte Reversibilität des Vorgangs sichergestellt wird.

Hierbei ist das elastomere Rückstellelement 23 aus einem elastomeren Schaumstoff und/oder einem Elastomer-Kunststoff geformt. Das elastomere Rückstellelement 23 ist bevorzugt als Schaumstoff-Ronde ausgebildet.

Das elastomere Rückstellelement 23 kann insbesondere unterschiedliche Bereiche mit unterschiedlicher Rückstellkraft aufweisen, um die Translation und/oder Rotation des Aufnahmewerkzeuggehäuses 27 gegenüber dem Ausgleichselementgehäuse 26 zu beeinflussen. Die Bereiche mit unterschiedlicher Rückstellkraft können insbesondere durch unterschiedliche Wandstärken des elastomeren Rückstellelements 23 und/oder durch unterschiedliche entlang sich der Welle 24 erstreckender Höhen des elastomeren Rückstellelements 23 und/oder durch die Verwendung von Materialien mit unterschiedlicher Elastizität und/oder durch Einschnitte in das elastomere Rückstellelement 23 und/oder durch in das elastomere Rückstellelement 23 eingeführte Bauteile mit einer unterschiedlichen Rückstellkraft charakterisiert sein.

Das elastomere Rückstellelement 23 kann insbesondere aus einer Mehrzahl von modular zusammengefügten Unterelementen bestehen, welche insbesondere zumindest ein Nachgiebigkeitselement aufweisen, welches eine geringe Rückstellkraft bereitstellt und/oder zumindest ein Widerstandselement aufweisen, welches eine hohe Rückstellkraft bereitstellt.

Somit wird insbesondere eine Anpassung der Steifigkeit des elastomeren Rückstellelements 23 an die zu greifenden Objekte 9, insbesondere Packstücke 13 erreicht, um beispielsweise bei leichten Objekten 9 aufgrund einer geringeren Steifigkeit nicht schon abgestellte Packstücke 13 wieder von der Zielpalette 12 herunterzustoßen.

Dieses kann beispielsweise durch unterschiedlich Materialien, beispielsweise unterschiedlich steife Schäume als Material, des elastomeren Rückstellelements 23 erzielt werden. Auch kann mit der Formgebung (Stärke des elastomeren Rückstellelements 23, Höhe des elastomeren Rückstellelements 23) die Steifigkeit des elastomeren Rückstellelements 23 beeinflusst werden. Zusätzlich kann ein anisotropes Verhalten eingestellt werden, indem ein nicht-rotationssymmetrischer Beschnitt des elastomeren Rückstellelements 23 genutzt wird (z.B. steifer in x-Richtung). Weiterhin können die Steifigkeit des elastomeren Rückstellelements 23 gegenüber Torsion um die z-Achse und die Steifigkeit des elastomeren Rückstellelements 23 gegenüber Verschiebungen in x und y unabhängig voneinander eingestellt werden, indem beispielsweise anstelle einer Ronde Kreissegmente eingesetzt werden, oder durch Schnitte im elastomeren Rückstellelement 23 gezielt die Steifigkeit reduziert wird. Auch kann die Steifigkeit des elastomeren Rückstellelements 23 gegenüber Verschiebungen in z-Richtung durch die Höhe des elastomeren Rückstellelements 23 unabhängig von den anderen Größen eingestellt werden.

Auf diese Weise können durch mehrere Ausgleichselemente 20 mit unterschiedlichen elastomeren Rückstellelementen 23 modular Nachgiebigkeits-Elemente genutzt werden, die zum jeweiligen Produktspektrum, das gegriffen werden soll, passen. Ein Austausch der unterschiedlichen Austauschelemente 20 kann über eine entsprechende Schnittstelle, beispielsweise Verbindungsbolzen eines Werkzeugwechselsystems, erfolgen. Ein solcher Austausch der Ausgleichselemente 20 kann manuell oder automatisiert erfolgen.

Um eine Zugbelastung des Schaumstoffs des elastomeren Rückstellelements 23 zu reduzieren oder auszuschließen, kann das Ausgleichselement 20 zumindest ein in Figur 3 nicht dargestelltes Stabilisierungselement, insbesondere mindestens ein Metallseil, aufweisen, welches mit dem Ausgleichselementgehäuse 26 und mit dem Aufnahmewerkzeuggehäuse 27 verbunden ist.

Die Verformung des elastomeren Rückstellelements 23 kann gemäß der vorliegenden Erfindung insbesondere dadurch ausgelöst werden, dass das Aufnahmewerkzeug 8 in Kontakt mit einem Nachbarpackstück 13 auf der Zielpalette 12 kommt, wodurch die durch die Verformung des elastomeren Rückstellelements 23 ermöglichte entsprechende Relativbewegung zwischen dem Ausgleichselementgehäuse 26 und dem Aufnahmewerkzeuggehäuse 27 erreicht wird.

Dadurch kann der Lasthandhabungsmanipulator M Spalten in vier Freiheitsgraden (x-Richtung, y-Richtung, z-Richtung und ψ-Winkel) zufahren und ermöglicht damit eine spaltfreie Ablage von einem durch das Aufnahmewerkzeug 8 gegriffenen Objekt 9, insbesondere Packstück 13, auf der Zielpalette 12, insbesondere wenn die Relativbewegung innerhalb des Ausgleichselements 20 sensorisch erfasst wird und damit optional auch zur Regelung der entsprechenden Bewegung dienen kann. Hierbei weist das Ausgleichselement 20 insbesondere zumindest eine Sensoreinrichtung auf, welche ausgebildet ist, zumindest eine Translation und/oder eine Rotation des Aufnahmewerkzeuggehäuses 27 gegenüber dem Ausgleichselementgehäuse 26 zu erfassen.

Die Sensoreinrichtung kann zumindest eine xy-Sensoreinrichtung aufweisen, welche ausgebildet ist, eine Translation des Aufnahmewerkzeuggehäuses 27 gegenüber dem Ausgleichselementgehäuse 26 entlang der x-Richtung und/oder der y-Richtung zu erfassen.

Die zumindest eine xy-Sensoreinrichtung ist hierbei insbesondere ausgebildet, eine Positionsveränderung der Welle 24 in dem Ausgleichselementgehäuse 26 zu erfassen und/oder ist ausgebildet, eine Verschiebung der Scheibe 30 in dem Ausgleichselementgehäuse 26 zu erfassen, um eine Translation des Aufnahmewerkzeuggehäuses 27 gegenüber dem Ausgleichselementgehäuse 26 entlang der x-Richtung und der y-Richtung zu erfassen.

Die Sensoreinrichtung und/oder das Ausgleichselement 20 weisen zumindest eine z-Sensoreinrichtung auf, welche ausgebildet ist, eine Translation des Aufnahmewerkzeuggehäuses 27 gegenüber dem Ausgleichselementgehäuse 26 entlang der z-Richtung zu erfassen, und/oder das Ausgleichselement 20 kann zumindest einen Rotationssensor aufweisen, welcher ausgebildet ist, eine Rotation des Aufnahmewerkzeuggehäuses 27 gegenüber dem Ausgleichselementgehäuse 26 zu erfassen.

Die zumindest eine z-Sensoreinrichtung ist ausgebildet, eine Veränderung des Abstands zwischen dem Ausgleichselementgehäuse 26 und dem Aufnahmewerkzeuggehäuse 27 zu erfassen, um eine Translation des Aufnahmewerkzeuggehäuses 27 gegenüber dem Ausgleichselementgehäuse 26 entlang der z-Richtung zu erfassen.

Hierbei weist der mobile Kommissionierroboter R eine Steuerung 25 auf, welche steuerungstechnisch mit der zumindest einen Sensoreinrichtung und mit zumindest einem Antrieb des Roboterarms 4, 5, 6, 7 verbunden ist, und wobei die Steuerung 25 ausgebildet ist, den zumindest einen Antrieb des Roboterarms 4, 5, 6, 7 in Abhängigkeit von der durch die Sensoreinrichtung erfassten Translation und/oder Rotation des Aufnahmewerkzeuggehäuse 27 gegenüber dem Ausgleichselementgehäuse 27 zu steuern, um eine vorteilhafte Positionierung des durch das Aufnahmewerkzeug 8 aufgenommenen Objekts 9 zu erreichen.

Das elastomere Rückstellelements 23 stellt die Verbindung zwischen dem Aufnahmewerkzeug 8 und dem Ausgleichselementgehäuse 26 des xy-Elements 22 dar. In dem Ausgleichselementgehäuse 26 des xy-Elements 22 werden die Bewegungen in der xy-Ebene und die Rotation um den ψ-Winkel ermöglicht und entsprechende Momente abgestützt. Wie bereits beschrieben läuft hierbei die Scheibe 30 mittels der bevorzugt als Axialkugellager ausgebildeten Lagereinrichtung 32 zwischen der Bodenplatte 26-1 und der Deckelplatte 26-2 des Ausgleichselementgehäuse 26, welche insbesondere durch das Einstellgewinde spielfrei eingestellt werden können.

Die Momentabstützung wird durch die zentrale Welle 24 erreicht, welche drehfest mit dem Aufnahmewerkzeuggehäuse 27 verbunden ist, und welche spielarm in der an der Scheibe 30 befestigten Führungsbuchse 29 geführt wird, so dass eine Bewegung entlang der z-Richtung zwischen dem Aufnahmewerkzeug 8 und der Scheibe 30 ermöglicht wird.

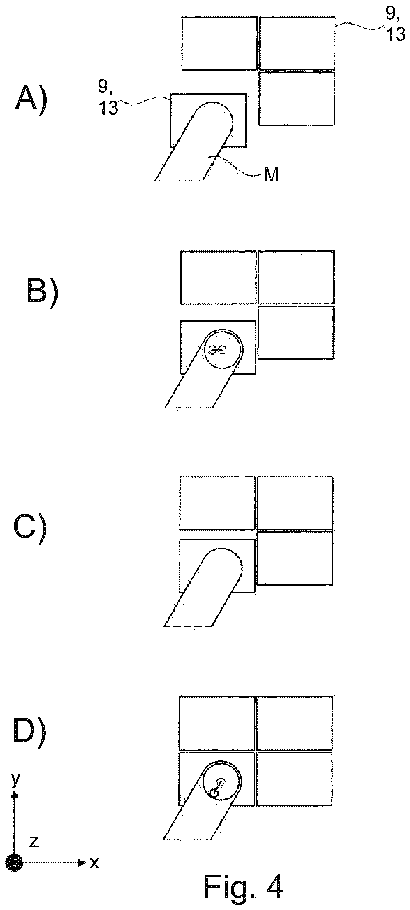

Die Figuren 4A bis 4D zeigen schematische Darstellungen eines Kommissionier-Vorgangs zur Kommissionierung von Objekten mit einem Lasthandhabungsmanipulator M eines mobilen Kommissionierroboters R mit einem erfindungsgemäßen Ausgleichselement 20 gemäß einem Ausführungsbeispiel der vorliegenden Erfindung.

Hierbei ist sind in den Figuren 4A bis 4D entsprechende auf einer Zielpalette 12 in einem Packmuster bereits abgelegte Objekte 9, bzw. Packstücke 13, lediglich durch dunkle Rechtecke dargestellt. Hierbei ist in den Figuren 4A bis 4D die xy-Ebene dargestellt und eine zu der xy-Ebene orthogonal angeordnete z-Achse erstreckt sich aus der Zeichenebene auf den Betrachter zu.

Ein in den Figuren 4A bis 4D lediglich schematisch dargestellter Lasthandhabungsmanipulator M mit einem aufgenommenen Objekt 9, bzw. Packstück 13, versucht hierbei das aufgenommene Objekt 9, bzw. Packstück 13, an den auf der Zielpalette 12 in einem Packmuster bereits abgelegten Objekte 9, bzw. Packstücken 13 möglichst spaltfrei, bzw. mit einem äußerst geringen Spalt anzulegen.

In dem in Figur 4A dargestellten ersten Schritt wird das aufgenommene Objekt 9 durch den Lasthandhabungsmanipulator M in der xy-Ebene, d.h. in x-Richtung und in y-Richtung auf die bereits abgelegten Objekte 9 zubewegt, bis ein sensorisch erfasster gewisser Mindestabstand zu den bereits abgelegten Objekte 9 erreicht ist.

In dem in Figur 4B dargestellten zweiten Schritt wird das aufgenommene Objekt 9 durch den Lasthandhabungsmanipulator M in x-Richtung auf die bereits abgelegten Objekte 9 zubewegt, bis sensorisch ein Kontakt zwischen dem aufgenommenen Objekt 9 und den abgelegten Objekten 9 durch eine Auslenkung des Ausgleichselements 20 mittels der xy-Sensoreinrichtung erfasst wurde, wodurch ein Spalt in x-Richtung zugefahren wird.

Anschließend wird in dem in Figur 4C dargestellten dritten Schritt das aufgenommene Objekt 9 durch den Lasthandhabungsmanipulator M in y-Richtung auf die bereits abgelegten Objekte 9 zubewegt, bis sensorisch ein Kontakt zwischen dem aufgenommenen Objekt 9 und den abgelegten Objekten 9 durch eine Auslenkung des Ausgleichselements 20 mittels der xy-Sensoreinrichtung erfasst wurde, wodurch ein Spalt in y-Richtung zugefahren wird.

Anschließend wird in dem in Figur 4D dargestellten vierten Schritt das aufgenommene Objekt 9 durch den Lasthandhabungsmanipulator M in z-Richtung auf die bereits abgelegten Objekte 9 zubewegt, bis sensorisch ein Kontakt zwischen dem aufgenommenen Objekt 9 und den abgelegten Objekten 9, bzw. wenn noch keine Objekte 9 auf der Palette 12 liegen mit dem Boden der Palette, durch eine Auslenkung des Ausgleichselements 20 mittels der z-Sensoreinrichtung erfasst wurde, wodurch ein Spalt in z-Richtung zugefahren wird.

Eine mögliche Ansteuerung des Roboterarms 4, 5, 6, 7 kann hier über die Beaufschlagung der Geschwindigkeitskomponenten in x-Richtung und y-Richtung mit einem Faktor geschehen. Mit zunehmender Auslenkung wird dieser Faktor kleiner und erreicht schließlich 0.

Beispielsweise ist eine Ansteuerung des Roboterarms 4, 5, 6, 7 anhand einer Kennlinie möglich, welche eine Sollverschiebung innerhalb des Ausgleichselements 20 von 3 mm einregelt, wobei andere Werte natürlich möglich sind. Hierbei wird zuerst die x-Position eingeregelt, anschließend die y-Position eingeregelt, oder anders herum.

In Verbindung mit einem Paletten-Container zur Ladungsstabilisierung der Zielpalette 12 kann beim Ablegen von Objekten 9 eine durch das Ausgleichselement 20 geregelte Bahn entlang der Innenwände des Paletten-Containers abgefahren werden. Hierzu wird ein Kontakt zwischen dem Objekt 9 und der Wand des Paletten-Containers hergestellt, welcher durch die in dem Ausgleichselement 20 vorhandene xy-Sensoreinrichtung erfasst werden kann. Anschließend kann schleifend entlang der Wand in die Tiefe des Paletten-Containers hinein gefahren werden, bis die gewünschte Ablagetiefe erreicht wird. Die mittels der xy-Sensoreinrichtung gemessene Auslenkung des Ausgleichselements 20 kann hierbei als Regelgröße dienen.

Auch eine z-Sensoreinrichtung kann an dem Ausgleichselement 20 verbaut sein. Diese kann über das elastomere Rückstellelement 23 hinweg zum Aufnahmewerkzeuggehäuse 27 messen. Auf diese Weise kann eine erfolgte Ablage auf dem darunter liegenden Objekt 9, bzw. dem Boden der Zielpalette 12, detektiert werden. In einer weiteren Ausgestaltung kann die z-Sensorik auch schon beim Pick auf der Quellpalette genutzt werden, um Toleranzen in der Lokalisierung der Objekte 9 auszugleichen.

Mit dem erfindungsgemäßen Ausgleichselement 20 sind somit sowohl Bewegungen in der xy-Ebene, entlang der z-Achse, als auch Drehbewegungen um die z-Achse möglich. Dabei ist eine rollende Bewegung vorteilhaft, um die Reibungskräfte kleinzuhalten. Das wird erfindungsgemäß durch den Einsatz von Axialkugellagern gelöst. Axialkugellager erlauben eine reibungsarme und allseitige Bewegung der Scheibe 30 im Ausgleichselementgehäuse 26. Die Scheibe 30 ist an der Welle 24 starr befestigt. Die Welle 24 dient weiterhin als Verbindungsstück vom xy-Element 22 zum Feststellelement 21. Das Feststellelement 21 dient dazu, die im xy-Element 22 eingestellte Position zu arretieren, oder eine weitere Bewegung zuzulassen. Ein Arretieren ist insbesondere bei schnellen Bewegungen und großen Beschleunigungen sinnvoll, um Schwingungen im System zu verhindern.

Erfindungsgemäß wird ein Verfahren empfohlen, bei dem das Ausgleichselement 20 durch das Feststellelement 21 über weite Strecken des Greifzyklus arretiert ist und erst in unmittelbarer Nähe zum Ablageort auf der Zielpalette eine Bewegung im xy-Element 22 zugelassen wird. Die Arretierung wird erfindungsgemäß zwischen einer Scheibe des Feststellelements 21 und einer magnetischen Spannvorrichtung erzeugt. Die Spannvorrichtung besteht insbesondere aus einem oberen und einem unteren Teil, die axial zueinander beweglich sind. Die beiden Teile werden durch Federn gelüftet und magnetisch zueinander gezogen, um die Scheibe des Feststellelements 21 zu arretieren. In einer weiteren Ausgestaltung der Erfindung wird die Reibkraft zwischen der Scheibe des Feststellelements 21 und der Spannvorrichtung so geregelt, dass ein Durchrutschen bei Überlast auch im arretierten Zustand ermöglicht wird. Damit gewinnt der Roboter Crash-Sicherheit, die Ware wird geschützt, bzw. geschont und die Sicherheit gegenüber abfallenden Teilen wird erhöht. Die Scheibe des Feststellelements 21 ist bevorzugt verdrehsteif, aber axial verschieblich auf der Welle 24 befestigt und kann so einen Spalt zur Spannvorrichtung aufmachen.

Erfindungsgemäß wird vorgeschlagen, bei gelöstem Feststellelement 21 die Bewegungen innerhalb des Ausgleichselementes 20 sensorisch abzufragen. Ein Grundrauschen um die 0-Position ist dabei geeignet zu filtern und bei größeren Auslenkungen ein entsprechendes Signal zum Stopp der Bewegung des Roboterarms 4, 5, 6, 7 einzuleiten. Der Spalt ist dann geschlossen. Ein Verfahren des Aufnahmewerkzeugs in die andere Richtung wird weiterhin ermöglicht. Um die Zykluszeit zu reduzieren, wird vorgeschlagen, bei Ablage in einer Ecke, diagonal in die errechnete Sollposition zu fahren, anstatt zunächst den Spalt in x und dann in y zuzufahren, oder umgekehrt.

Die maximalen Wege sind durch die Größen der Scheibe 30 und des Ausgleichselementgehäuses 26 in x-Richtung und y-Richtung vorgegeben. Das elastomere Rückstellelement 23 muss dementsprechend ausgelegt werden. Eine Bewegung in z-Richtung wird vorteilhafterweise an mehreren Punkten durch Sensoren abgefragt, um auch leichte Kippbewegungen des Objekts 9 zu detektieren.

Die Vorteile des erfindungsgemäßen Ausgleichselements 20 sind eine Ergänzung einer messenden Sensorik beim Ablageprozess auf der Zielpalette, ein Ausgleich der Toleranzen, die bei messender Sensorik entstehen, ein Ausgleich der Toleranzen, die beim Anfahren an die Ablageposition auf der Zielpalette entstehen, ein Ausgleich von auf der Zielpalette entstandenen Toleranzen, beispielsweise durch Setzung oder Verrücken von Paketen, das Ermöglichen des spaltfreien Ablegens von Packstücken 13 auf einer gemischten Zielpalette in einem automatisierten Kommissionierungsprozess, ein Ausgleich von Schiefstellungen zwischen abzulegendem Packstück 13 und Zielpalette 12, beispielsweise wenn die Zielpalette schief steht, was vor allem bei mobilen Systemen auftritt, oder wenn ein Packstück 13 schief gegriffen wird, durch den entsprechenden Freiheitsgrad der Drehung um die z-Achse.

Darüber hinaus ermöglicht ein Feststellelement 21 trotz Nachgiebigkeit im System ein schnelles Fahren, ohne Schwingungen, durch ein gezieltes Zu- und Wegschalten der Nachgiebigkeit.

Das elastomere Rückstellelement 23 ermöglicht in einfacher Weise und bei geringem Bauraumbedarf eine Nachgiebigkeit in vier Freiheitsgraden x, y, z, ψ. Zudem ist das System skalierbar, sodass die Nachgiebigkeit und der mögliche Weg in allen Freiheitsgraden, auch unabhängig voneinander, angepasst werden kann. Damit ist ein Anpassen an unterschiedliche Geschwindigkeiten, Paketgrößen und -gewichte möglich.

Das Ausgleichselement 20 ist mit unterschiedlichen Greifern kompatibel. Dargestellt wurden Sauggreifer. Es ist auch für Backen-, Magnet- und Klebegreifer anwendbar, sowie unterschiedlich große Sauggreifer.

Durch den Einsatz des erfindungsgemäßen elastomeren Rückstellelements 23 zur Bereitstellung der Nachgiebigkeit ist das Ausgleichselement 20 deutlich weniger komplex. Das elastomere Rückstellelements 23 kann als separates Bauteil modular angepasst werden. Insbesondere in Verbindung mit einem Werkzeugwechselsystem ist die Modularität sinnvoll.

### Bezugszeichenliste

- M: Lasthandhabungsmanipulator
- R: Mobiler Kommissionierroboter
- i1-i5: Vertikale Achsen
- 1: Autonomes Fahrzeug
- 2: Vertikaler Hubmast
- 3: Schlitten
- 4: Erstes Armelement des Roboterarms
- 5: Zweites Armelement des Roboterarms
- 6: Drittes Armelement des Roboterarms
- 7: Viertes Armelement des Roboterarms
- 8: Aufnahmewerkzeug
- 9: Objekt
- 11: Begleitfahrzeug
- 12: Zielladungsträger
- 13: Packstück
- 20: Ausgleichselement
- 21: Feststellelement
- 22: xy-Element
- 23: Elastomeres Rückstellelement
- 23-1: Obere Grundfläche
- 23-1: Untere Grundfläche
- 24: Welle
- 24-1: Wellenlängsachse
- 25: Steuerung
- 26: Ausgleichselementgehäuse
- 26-1: Bodenplatte des Ausgleichselementgehäuses
- 26-2: Deckelplatte des Ausgleichselementgehäuses
- 27: Aufnahmewerkzeuggehäuse
- 28: Durchbruch
- 29: Führungshülse
- 30: Scheibe
- 31: Scheibenöffnung
- 32: Lagereinrichtung

## Patentansprüche

1. Mobiler Kommissionierroboter (R) zur automatischen Kommissionierung von Objekten (9) mit einem Lasthandhabungsmanipulator (M),
wobei der Lasthandhabungsmanipulator (M) einen Roboterarm (4, 5, 6, 7) und ein mit dem Roboterarm (4, 5, 6, 7) verbundenes Aufnahmewerkzeug (8) zur Aufnahme des Objekts (9), sowie ein Ausgleichselement (20) umfasst, welches zwischen dem Roboterarm (4, 5, 6, 7) und dem Aufnahmewerkzeug (8) angeordnet ist, wobei das Ausgleichselement (20) ausgebildet ist, Relativbewegungen zwischen dem Roboterarm (4, 5, 6, 7) und dem Aufnahmewerkzeug (8) zuzulassen,
wobei das Ausgleichselement (20) ein Ausgleichselementgehäuse (26) aufweist, welches an dem Roboterarm (4, 5, 6, 7) befestigbar ist, wobei das Ausgleichselement (20) eine Welle (24) aufweist, welche das Ausgleichselementgehäuse (26) mit einem Aufnahmewerkzeuggehäuse (27) des Aufnahmewerkzeugs (8) verbindet, und
wobei die Welle (24) ausgebildet ist, das Aufnahmewerkzeuggehäuse (27) des Aufnahmewerkzeugs (8) gegenüber dem Ausgleichselementgehäuse (26) entlang von drei Translationsrichtungen, insbesondere x-Richtung, y-Richtung und z-Richtung, zu translatieren und entlang einer Rotationsrichtung um die Wellenlängsachse (24-1) der Welle (24), insbesondere um den ψ-Winkel, zu rotieren,
**dadurch gekennzeichnet, dass**
das Ausgleichselement (20) ein elastomeres Rückstellelement (23) aufweist, welches zwischen dem Aufnahmewerkzeuggehäuse (27) und dem Ausgleichselementgehäuse (26) angeordnet ist und unmittelbar mit dem Aufnahmewerkzeuggehäuse (27) und mit dem Ausgleichselementgehäuse (26) verbunden ist,
wobei das elastomere Rückstellelement (23) ausgebildet ist, bei einer Translation entlang zumindest einer der drei Translationsrichtungen und/oder bei einer Rotation des Aufnahmewerkzeugs (8) gegenüber dem Ausgleichselementgehäuse (26) eine Rückstellkraft bereitzustellen, um nach dem Ende der Translationsbewegung und/oder Rotationsbewegung eine Rückführung des Aufnahmewerkzeugs (8) in die Ursprungsposition zu ermöglichen.

2. Mobiler Kommissionierroboter (R) nach Anspruch 1, **dadurch gekennzeichnet, dass** das elastomere Rückstellelement (23) einen Durchbruch (28) aufweist, welcher sich von einer dem Ausgleichselementgehäuse (26) zugewandten Seite des elastomeren Rückstellelements (23) zu einer dem Aufnahmewerkzeuggehäuse (27) zugewandten Seite des elastomeren Rückstellelements (23) erstreckt, und wobei die Welle (24) durch den Durchbruch (28) geführt ist, wobei der Durchbruch (28) insbesondere mittig in dem elastomeren Rückstellelement (23) angeordnet ist.

3. Mobiler Kommissionierroboter (R) nach Anspruch 1 oder 2, **dadurch gekennzeichnet, dass** das elastomere Rückstellelement (23) als ein Hohlzylinder, insbesondere ringförmiger oder scheibenförmiger Hohlzylinder, ausgebildet ist, wobei eine obere Grundfläche (23-1) des Hohlzylinders unmittelbar mit dem Ausgleichselementgehäuse (26) verbunden ist, wobei eine untere Grundfläche (23-2) des Hohlzylinders unmittelbar mit dem Aufnahmewerkzeuggehäuse (27) verbunden ist, und wobei die Welle (24) durch einen Hohlkörperinnenraum des Hohlzylinders geführt ist.

4. Mobiler Kommissionierroboter (R) nach einem der vorangehenden Ansprüche, **dadurch gekennzeichnet, dass** das elastomere Rückstellelement (23) aus einem elastomeren Schaumstoff und/oder einem Elastomer-Kunststoff geformt ist.

5. Mobiler Kommissionierroboter (R) nach einem der vorangehenden Ansprüche, **dadurch gekennzeichnet, dass** das elastomere Rückstellelement (23) unterschiedliche Bereiche mit unterschiedlicher Rückstellkraft aufweist, um die Translation und/oder Rotation des Aufnahmewerkzeuggehäuse (27) gegenüber dem Ausgleichselementgehäuse (26) zu beeinflussen, wobei die Bereiche mit unterschiedlicher Rückstellkraft insbesondere durch unterschiedliche Wandstärken des elastomeren Rückstellelements (23) und/oder durch unterschiedliche entlang sich der Welle (24) erstreckender Höhen des elastomeren Rückstellelements (23) und/oder durch die Verwendung von Materialien mit unterschiedlicher Elastizität und/oder durch Einschnitte in das elastomere Rückstellelement (23) und/oder durch in das elastomere Rückstellelement (23) eingeführte Bauteile mit einer unterschiedlichen Rückstellkraft charakterisiert sind.

6. Mobiler Kommissionierroboter (R) nach einem der vorangehenden Ansprüche, **dadurch gekennzeichnet, dass** das elastomere Rückstellelement (23) aus einer Mehrzahl von modular zusammengefügten Unterelementen besteht, welche insbesondere zumindest ein Nachgiebigkeitselement aufweisen, welches eine geringe Rückstellkraft bereitstellt und/oder zumindest ein Widerstandselement aufweisen, welches eine hohe Rückstellkraft bereitstellt.

7. Mobiler Kommissionierroboter (R) nach einem der vorangehenden Ansprüche, **dadurch gekennzeichnet, dass** die Welle (24) drehfest mit dem Aufnahmewerkzeuggehäuse (27) verbunden ist, wobei in dem Ausgleichselementgehäuse (26) eine Führungshülse (29) angeordnet ist, in der die Welle (24) längsverschiebbar angeordnet ist, wobei die Führungshülse (29) ausgebildet ist, eine Verlagerung der Welle (24) zu ermöglichen, um das Aufnahmewerkzeuggehäuse (27) des Aufnahmewerkzeugs (8) gegenüber dem Ausgleichselementgehäuse (26) entlang der z-Richtung zu translatieren.

8. Mobiler Kommissionierroboter (R) nach Anspruch 7, **dadurch gekennzeichnet, dass** die Welle (24) in der Führungshülse (29) um die Wellenlängsachse (24-1) drehbar angeordnet ist, wobei die Führungshülse (29) ausgebildet ist, eine Verdrehung der Welle (24) zu ermöglichen, um das Aufnahmewerkzeuggehäuse (27) des Aufnahmewerkzeugs (8) gegenüber dem Ausgleichselementgehäuse (26) und um den ψ-Winkel zu rotieren.

9. Mobiler Kommissionierroboter (R) nach Anspruch 7 oder 8, **dadurch gekennzeichnet, dass** in dem Ausgleichselementgehäuse (26) eine Scheibe (30) mit einer Scheibenöffnung (31) angeordnet ist, wobei die Führungshülse (29) in der Scheibenöffnung (31) der Scheibe (30) befestigt ist.

10. Mobiler Kommissionierroboter (R) nach Anspruch 9, **dadurch gekennzeichnet, dass** in dem Ausgleichselementgehäuse (26) eine Lagereinrichtung (32), insbesondere mindestens ein Axialkugellager, angeordnet ist, welche ausgebildet ist, eine Verschiebung der Scheibe (30) innerhalb des Ausgleichselementgehäuses (26), insbesondere entlang der x-Richtung und/oder y-Richtung, zu ermöglichen, um das durch die Welle (24) mit dem Ausgleichselementgehäuse (26) verbundene Aufnahmewerkzeuggehäuse (27) entlang der x-Richtung und/oder y-Richtung zu verlagern.

11. Mobiler Kommissionierroboter (R) nach Anspruch 10, **dadurch gekennzeichnet, dass** die Scheibe (30) mittels der Lagereinrichtung (32) zwischen einer Bodenplatte (26-1) des Ausgleichselementgehäuses (26) und einer Deckelplatte (26-2) des Ausgleichselementgehäuses (26) verschiebbar angeordnet ist.

12. Mobiler Kommissionierroboter (R) Anspruch 11, **dadurch gekennzeichnet, dass** die Deckelplatte (26-2) im Ausgleichselementgehäuse (26) verstellbar angeordnet ist, wobei insbesondere zwischen der Deckelplatte (26-2) des Ausgleichselementgehäuses (26) und dem Ausgleichselementgehäuse (26) ein Einstellgewinde ausgebildet ist.

13. Mobiler Kommissionierroboter (R) nach einem der vorangehenden Ansprüche, **dadurch gekennzeichnet, dass** das Ausgleichselement (20) ein Feststellelement (21) aufweist, welches unmittelbar mit dem Ausgleichselementgehäuse (26) und unmittelbar mit dem Roboterarm (4, 5, 6, 7) verbunden ist, wobei die Welle (24) durch das Ausgleichselementgehäuse (26) geführt ist und mit dem Feststellelement (21) verbunden ist.

14. Mobiler Kommissionierroboter (R) nach einem der vorangehenden Ansprüche, **dadurch gekennzeichnet, dass** das Ausgleichselement (20) zumindest ein Stabilisierungselement, insbesondere mindestens ein Metallseil, aufweist, welches mit dem Ausgleichselementgehäuse (26) und mit dem Aufnahmewerkzeuggehäuse (27) verbunden ist.

15. Mobiler Kommissionierroboter (R) nach einem der vorangehenden Ansprüche, **dadurch gekennzeichnet, dass** das Ausgleichselement (20) zumindest eine Sensoreinrichtung aufweist, welche ausgebildet ist, zumindest eine Translation und/oder eine Rotation des Aufnahmewerkzeuggehäuses (27) gegenüber dem Ausgleichselementgehäuse (26) zu erfassen.

16. Mobiler Kommissionierroboter (R) nach Anspruch 15, **dadurch gekennzeichnet, dass** das Ausgleichselement (20) zumindest eine xy-Sensoreinrichtung aufweist, welche ausgebildet ist, eine Translation des Aufnahmewerkzeuggehäuses (27) gegenüber dem Ausgleichselementgehäuse (26) entlang der x-Richtung und/oder der y-Richtung zu erfassen, und/oder dass das Ausgleichselement (20) zumindest eine z-Sensoreinrichtung aufweist, welche ausgebildet ist, eine Translation des Aufnahmewerkzeuggehäuses (27) gegenüber dem Ausgleichselementgehäuse (26) entlang der z-Richtung zu erfassen, und/oder dass das Ausgleichselement (20) zumindest einen Rotationssensor aufweist, welcher ausgebildet ist, eine Rotation des Aufnahmewerkzeuggehäuses (27) gegenüber dem Ausgleichselementgehäuses (26), insbesondere um den ψ-Winkel, zu erfassen.

17. Mobiler Kommissionierroboter (R) nach Anspruch 16, **dadurch gekennzeichnet, dass** die zumindest eine xy-Sensoreinrichtung ausgebildet ist, eine Positionsveränderung der Welle (24) in dem Ausgleichselementgehäuse (26) zu erfassen und/oder ausgebildet ist, eine Verschiebung der Scheibe (30) in dem Ausgleichselementgehäuse (26) zu erfassen, um eine Translation des Aufnahmewerkzeuggehäuse (27) gegenüber dem Ausgleichselementgehäuse (26) entlang der x-Richtung und/oder der y-Richtung zu erfassen.

18. Mobiler Kommissionierroboter (R) nach Anspruch 16 oder 17, **dadurch gekennzeichnet, dass** die zumindest eine z-Sensoreinrichtung ausgebildet ist, eine Veränderung des Abstands zwischen dem Ausgleichselementgehäuse (26) und dem Aufnahmewerkzeuggehäuse (27) zu erfassen, um eine Translation des Aufnahmewerkzeuggehäuses (27) gegenüber dem Ausgleichselementgehäuse (26) entlang der z-Richtung zu erfassen.

19. Mobiler Kommissionierroboter (R) nach einem der Ansprüche 15 bis 18, **dadurch gekennzeichnet, dass** der mobile Kommissionierroboter (R) eine Steuerung (25) aufweist, welche steuerungstechnisch mit der zumindest einen Sensoreinrichtung und mit zumindest einem Antrieb des Roboterarms (4, 5, 6, 7) verbunden ist, und wobei die Steuerung (25) ausgebildet ist, den zumindest einen Antrieb des Roboterarms (4, 5, 6, 7) in Abhängigkeit von der durch die Sensoreinrichtung erfassten Translation und/oder Rotation des Aufnahmewerkzeuggehäuses (27) gegenüber dem Ausgleichselementgehäuse (26) zu steuern, um eine vorteilhafte Positionierung des durch das Aufnahmewerkzeug (8) aufgenommenen Objekts (9) zu erreichen.
